(19) **Europäisches Patentamt**
**European Patent Office**
**Office européen des brevets**

(11) **EP 3 339 938 A1**

(12) **EUROPEAN PATENT APPLICATION**
published in accordance with Art. 153(4) EPC

(43) Date of publication:
**27.06.2018 Bulletin 2018/26**

(51) Int Cl.:
*G02B 27/02* (2006.01)     *G02B 5/18* (2006.01)
*G02B 6/34* (2006.01)

(21) Application number: **16837196.1**

(22) Date of filing: **22.08.2016**

(86) International application number:
**PCT/JP2016/074423**

(87) International publication number:
**WO 2017/030207 (23.02.2017 Gazette 2017/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.08.2015 JP 2015163044
14.09.2015 US 201562218217 P**

(71) Applicant: **Hoya Lens Thailand Ltd.
Pathumthani 12130 (TH)**

(72) Inventor: **AOKI, Hiroshi
Tokyo 161-8347 (JP)**

(74) Representative: **Betten & Resch
Patent- und Rechtsanwälte PartGmbB
Maximiliansplatz 14
80333 München (DE)**

(54) **OPTICAL DEVICE**

(57)     Provided is an optical device which increases design flexibility. An optical device (10) includes: a light guiding unit (100), the cross-section of which is approximately trapezoidal; and diffraction gratings (101, 102) disposed in the light guiding unit (100). The diffraction gratings (101, 102) are obliquely disposed with respect to the longitudinal direction (an arrow 190) of the light guiding unit (100). A signal that is output from a micro-projector (light source) (150) enters the diffraction grating (101), light that is diffracted by the diffraction grating (101) is reflected by a reflecting unit (111), the reflected light is diffracted by the diffraction grating (102) and enters an eye (180).

FIG. 1

## Description

The present invention relates to an optical device, and more particularly to an optical device which allows a user to visually recognize images.

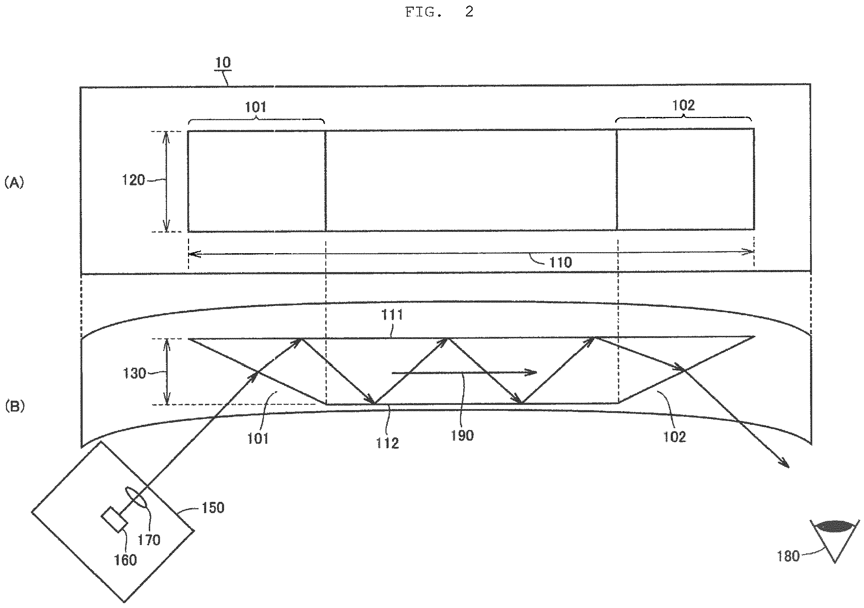

A device having a shape of spectacles is known as a so-called "wearable device". Japanese Patent Application Publication No. 2015-053163, for example, discloses an optical device and an image display apparatus which allow "improving the incidence efficiency of light to a light guiding member by effectively using wasted non-diffracted light". According to the technique disclosed in Japanese Patent Application Publication No. 2015-053163, "a first diffraction optical element 30a is disposed on a light entering surface 20a of a light guiding member 20, a second diffraction optical element 30b is disposed on a light emitting surface 20b of the light guiding member 20, and a reflection film 40 is disposed on a surface facing the first diffraction optical element 30a of the light guiding member 20. The first diffraction optical element 30a and the reflection film 40 are disposed at positions such that the light, which enters the first diffraction optical element 30a and is then reflected by the reflection film 40 without being diffracted by the first diffraction optical element 30a, is reflected and diffracted by the first diffraction optical element 30a" (see FIG. 2 and [ABSTRACT]).

[Citation List]

[Patent Literature]

[PTL 1] Japanese Patent Application Laid-open No. 2015-053163

## SUMMARY OF THE INVENTION

[Technical Problem]

According to the technique disclosed in Japanese Patent Application Publication No. 2015-053163, the light from the image display apparatus 11 obliquely enters the diffraction grating 30a in order to guide the low order diffracted light, the diffraction angle of which is small (e.g. first order diffracted light L2), to the eye of the user, and a reflection film is required to improve optical efficiency. This means that the location of the image display apparatus 11 is limited. The position of the eye of the user is also restricted to receive this diffracted light. Therefore a technique, which increases the flexibility to dispose the image display apparatus or the eye of the user, is demanded.

[Solution to Problem]

An optical device according to an embodiment includes a light guiding member and one or more diffraction gratings disposed in the light guiding member. One or more diffraction gratings are obliquely disposed with respect to the light traveling direction in the light guiding member.

It is preferable that both ends of the light guiding member are formed to be oblique with respect to the light traveling direction. The diffraction gratings are disposed on both ends of the light guiding member, respectively. Each of the diffraction gratings is obliquely disposed so that light transmitted through the diffraction grating disposed on an entering side of the optical device is reflected in a region of the light guiding member where the diffraction grating is not disposed.

It is preferable that an entering side end, out of the both ends of the light guiding member, is obliquely formed with respect to the light traveling direction. The diffraction grating is obliquely disposed on the entering side end so that light transmitted through the diffraction grating disposed on the entering side end is reflected in a region facing the diffraction grating disposed on an emitting side end out of the both ends.

It is preferable that one or more diffraction gratings include either one of a transmission type diffraction grating and a reflection type diffraction grating.

It is preferable that a slope, which corresponds to an inclination at which the one or more diffraction gratings are disposed, is formed on each of the end faces of the light guiding member.

The above and other objects, features, aspects and advantages of the present invention will be clarified by the following detailed description of the invention, which is understood with reference to the accompanying drawings.

## BRIEF DESCRIPTION OF THE DRAWINGS

FIG. 1 is a diagram depicting an overview of an optical device 10 which is configured for vertical incidence;

FIG. 2 is a diagram depicting a case when light enters from a micro-projector (light source) 150 disposed for oblique incidence;

FIG. 3 is a diagram depicting an overview of an optical device 30 according to another aspect;

FIG. 4 is a diagram depicting an overview of a design of the optical device (No. 1);

FIG. 5 is a diagram depicting an overview of a design of the optical device (No. 2);

FIG. 6 is a diagram depicting an overview of a design of the optical device (No. 3);

FIG. 7 is a graph depicting a diffraction efficiency of a right triangular saw-tooth-shaped diffraction grating;

FIG. 8 is a diagram depicting a cross-sectional shape of the diffraction grating;

FIG. 9 is a graph depicting a diffraction efficiency of a comb-tooth-shaped diffraction grating having a duty ratio of 50% ;

FIG. 10 is a diagram depicting a cross-sectional shape of the diffraction grating;

FIG. 11 is a graph depicting a diffraction efficiency of an isosceles triangular saw-tooth-shaped diffraction grating;

FIG. 12 is a diagram depicting a cross-sectional shape of the diffraction grating;

FIG. 13 is a graph depicting a change of the diffraction efficiency when the optical device size is changed in the isosceles triangular saw-tooth-shaped diffraction grating;

FIG. 14 is a diagram depicting the cross-sectional shape of the diffraction grating;

FIG. 15 is a graph depicting a change of diffraction efficiency when the optical device size is changed in the right triangular saw-tooth-shaped diffraction grating;

FIG. 16 is a diagram depicting the cross-sectional shape of the diffraction grating;

FIG. 17 is a graph depicting the dependency of the light intensity on the incident angle to the diffraction grating surface, the cross-section of which is a right triangle, in the case when the reflected light, the transmitted light, the first order diffracted light and the second order diffracted light are measured; and

FIG. 18 is a diagram depicting the state when a ray of light is refracted due to the refractive index difference at the interface.

## DESCRIPTION OF THE PREFERRED EMBODIMENTS

Embodiments of the invention will be described with reference to the drawings. In the following description, the same components are denoted with the same reference signs, and have the same names and same functions. Therefore redundant description thereof is omitted.

Vertical Incidence

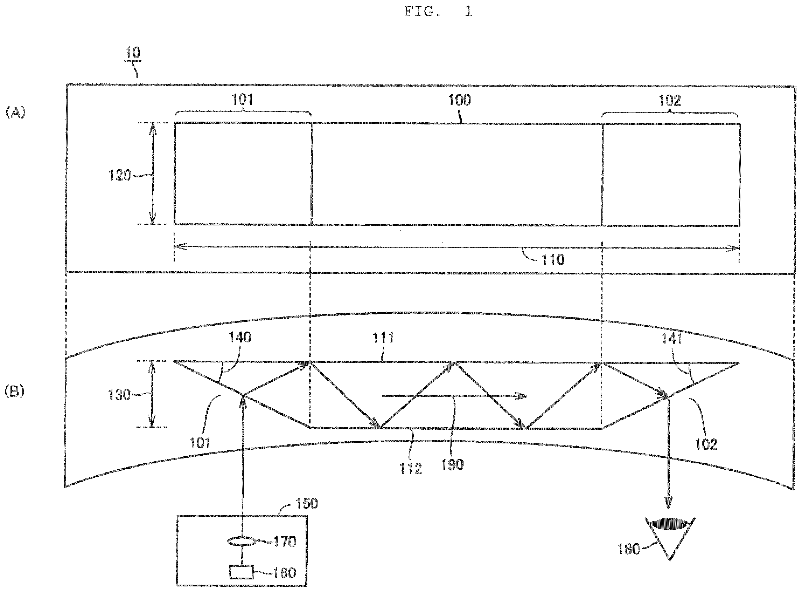

An optical device 10 according to this embodiment will be described with reference to FIG. 1. FIG. 1 is a diagram depicting an overview of the optical device 10 which is configured for vertical incidence. The optical device 10 includes at least a lens and a diffraction grating, for example. In this embodiment, "vertical" means approximately vertical to the surface of a light guiding unit 100 (the opposite side of the location of the eye). The light guiding unit 100 is formed inside the lens (optical device 10) of the spectacles, for example. According to an aspect of the invention, the light guiding unit 100 is configured inside the optical device 10 using a transparent material having a high refractive index.

As illustrated in FIG. 1(A), the optical device 10 includes the light guiding unit 100. In the light guiding unit 100, diffraction gratings 101 and 102 are disposed. The optical device 10 is, for example, a lens for a right eye or left eye of the spectacles. The width 110 of the optical device 10 is about 30 mm, for example. The height 120 is about 10 mm. These sizes are merely examples, and are set in accordance with the design of the spectacles.

According to an aspect of the invention, the refractive index of the light guiding unit 100 is 1.67, for example. The light guiding unit 100 is constituted by resin (e.g. plastic) or glass, for example.

In the diffraction gratings 101 and 102, grooves are formed at a 0.57 $\mu$m pitch, for example. The cross-section of each of the grooves is 1.57 $\mu$m, for example. The cross-section of each groove in the diffraction gratings 101 and 102 have a right triangle shape, for example.

As illustrated in FIG. 1(B), the light guiding unit 100 is configured so that the cross-section thereof is approximately trapezoidal. The tilt angles 140 and 141 are 26.6°, for example, but the values of the tilt angles 140 and 141 are not limited to this. The thickness 130 of the light guiding unit 100 is 2 mm, for example, but the value of the thickness 130 is not limited to this. The thickness of the optical device 10 can be approximately set in accordance with the design of the light guiding unit 100. As an example, the dimensions of the light guiding unit 100 can be set such that the minus second order diffracted light from the diffraction grating 101 is reflected by reflecting units 111 and 112, and this reflected light propagates to the diffraction grating 102. According to an aspect of the invention, the reflecting units 111 and 112 are implemented when the refractive index of the light guiding unit 100 is higher than the refractive index of the portion other than the light guiding unit 100 (e.g. peripheral area of the light guiding unit 100). The reflecting units 111 and 112 may be implemented by a film constituted mainly by a metal (e.g. aluminum) or oxide multilayer film.

According to an aspect of the invention, light emitted from a micro-projector (light source) 150 enters the diffraction grating 101 of the optical device 10. The micro-projector (light source) 150 includes an image display apparatus 160 and a collimate lens 170. The light which entered the optical device 10 is diffracted by the diffraction grating 101, and travels inside the light guiding unit 100 in the direction of the arrow 190. The direction of the arrow 190 corresponds to the longitudinal direction of the light guiding unit 100, for example. This light is reflected by the reflecting units 111 and 112. The reflecting units 111 and 112 are reflection films, for example. The light reflected by the reflecting units 111 and 112 travels further inside the light guiding unit 100 in the direction of the arrow 190. The light which reached the diffraction grating 102 is diffracted and emitted out from the light guiding unit 100. The light emitted outside the diffraction grating 102 enters an eye 180, and the image formed by the projection of the micro-projector (light source) 150 is recognized by the user of the optical device 10.

According to an example, in the case of the configuration in FIG. 1, the diffraction efficiency is about 15.7% when the minus second order diffracted light enters the light guiding unit 100.

Oblique Incidence

The light guiding unit 100 according to another aspect will be described with reference to FIG. 2. FIG. 2 is a diagram depicting a case when light enters from the micro-projector (light source) 150 disposed for oblique incidence. In this embodiment, "oblique" means oblique with respect to the light traveling direction in the light guiding unit 100.

As illustrated in FIG. 2(A), the configuration of the light guiding unit 100 is the same as the configuration illustrated in FIG. 1(A).

As illustrated in FIG. 2(B), the optical device 10 is configured so that the cross-section thereof is approximately trapezoidal, just like the case of FIG. 1.

The micro-projector (light source) 150 is disposed with respect to the light guiding unit 100, so that the light, which was emitted from the image display apparatus 160 and transmitted through the collimate lens 170, becomes oblique with respect to the reflecting unit 111. Just like the case of FIG. 1, the light from the collimate lens 170 is diffracted by the diffraction grating 101, and enters the light guiding unit 100. The light which traveled inside the light guiding unit 100 in the direction oblique with respect to the arrow 190 is reflected by the reflecting units 111 and 112. The reflected light is diffracted by the diffraction grating 102, and travels to outside the light guiding unit 100. In this case, compared with the above mentioned vertical incidence, the light enters closer to the normal line of the diffraction grating, hence the angle between the entering direction and the diffracting direction can be increased, which improves diffraction efficiency. Moreover, diffraction efficiency can be further improved without changing the trapezoidal shape, compared with the vertical incidence where the diffraction grating is disposed obliquely in order to improve the diffraction efficiency.

Vertical Emission (One Side Horizontal) Type

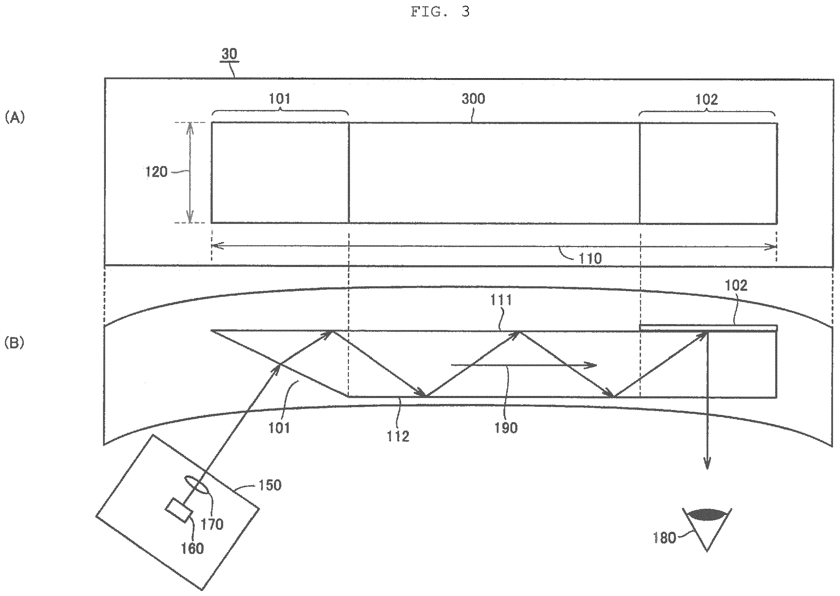

The optical device according to another aspect will be further described with reference to FIG. 3. FIG. 3 is a diagram depicting the configuration of an optical device 30 according to another aspect. The optical device 30 includes at least a lens and a diffraction grating, for example. As illustrated in FIG. 3(A), the optical device 30 includes a light guiding unit 300. The configuration illustrated in FIG. 3(A) is the same as in FIG. 1(A), hence detailed description is not repeated here.

As illustrated in FIG. 3(B), the diffraction grating 101 is disposed in one of the ends of the light guiding unit 300, so as to be oblique with respect to the arrow 190 direction. The light diffracted by the diffraction grating 101 travels in the arrow 190 direction, is reflected by the reflecting unit 111, and is then reflected by the diffraction grating 102, which is disposed parallel with the arrow 190 direction. In other words, the diffraction grating 102 is disposed on the surface of the light guiding unit 300, so as to be vertical to the direction in which the light is emitted from the reflecting unit 111 to the eye 180 of the user. The light that entered the diffraction grating 102 is reflected by the diffraction grating and enters the eye 180 of the user. According to this configuration, in addition to the effect of the optical device 10 of the embodiment in FIG. 1, the generation of image deviation caused by the shape of the prism can be prevented as well. In other words, the optical device 30 can sufficiently ensure the front field of view.

For example, even if a parallel plate exists, where a ray enters and emits vertically, inside the lens, this does not affect the direction of the ray that enters from outside to the eyeball, but if a prism exists on the ray, the ray is refracted due to the difference in refractive indexes at the interface. If the configuration in FIG. 3 is used, this refraction angle becomes zero.

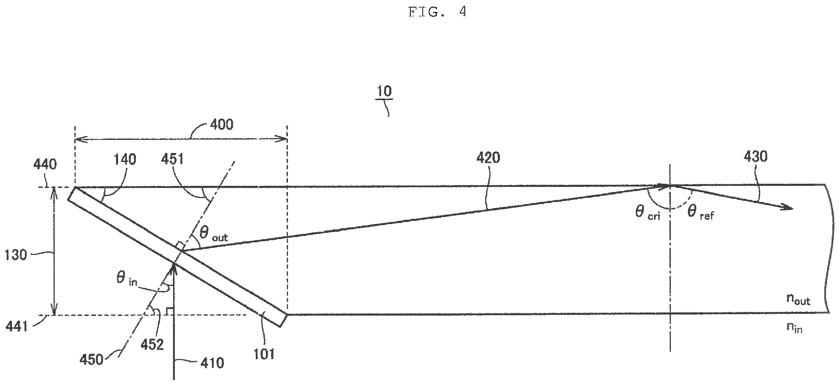

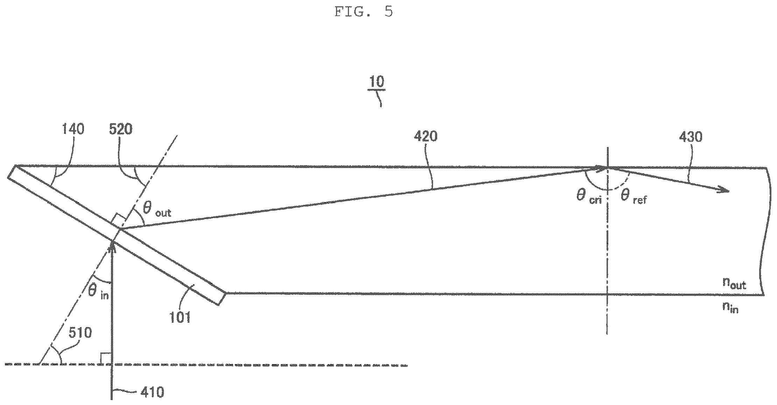

The design of the optical device according to this embodiment will be described with reference to FIG. 4 to FIG. 6. FIG. 4 to FIG. 6 are diagrams depicting an overview of the design of the optical device. In FIG. 5, the oblique diffraction grating portion is schematically illustrated.

(1) It is assumed that in an example of the optical device according to an aspect, the refractive index of the light guiding plate is 1.67, the refractive index outside the light guiding plate is 1.50, and the wavelength of the light to be guided is 530 nm. Then the thickness t of the light guiding unit 100, the incident beam diameter $\phi$ and the length w of the light guiding unit 100 are determined. When the diffraction grating 101 is disposed on both ends of the light guiding unit 100 obliquely with respect to the light traveling direction, the length w of the light guiding unit 100 is a distance between the entrance and the exit of the light in the light guiding unit 100. For example, it is assumed that t = 2 mm, $\phi$ = 4 mm, and w = 30 mm. It is also assumed that the light having wavelength 0.53 $\mu$m, which enters the center of the diffraction grating 101 disposed obliquely, is reflected 5 times by the reflecting units 111 and 112 as illustrated in FIG. 1.

(2) Then the tilt angle is determined. In the case of the above example (projection of the diffraction grating portion is 4 mm), the tilt angle = arctan (2 mm / 4 mm), that is, 26.6°.

(3) If a line parallel with the plane of the light guiding unit is drawn, the angles 451 and 452, which are formed by the line vertical to the diffraction grating 101 and this parallel line, are the same. Therefore $\theta_{in}$ = tilt angle 140 = 26.6°.

(4) The distance from the entering position of the light guiding unit 100 to the reflecting position can be determined as follows.

1/10 length of the light guiding unit 100 = 30 mm / 10 = 3 mm, half thickness of the light guiding unit 100 = 2 mm / 2 = 1 mm. Therefore $\theta_{cri}$ = arctan (3/1) = 71.6°.

Since arcsin ($n_{out}$ / $n_{in}$) = arcsin (1.50 / 1.67) = 63.9°, the condition of total reflection ($\theta_{cri}$ > arcsin ($n_{out}$ / $n_{in}$)) is satisfied.

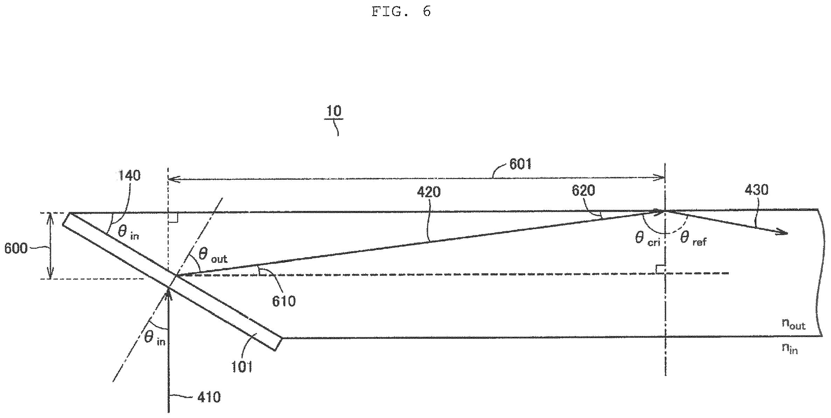

(5) As illustrated in FIG. 6, $\theta_{cri}$ = $\theta_{in}$ + $\theta_{out}$. Therefore $\theta_{out}$ = $\theta_{cri}$ - $\theta_{in}$ = 71.6 - 26.6 = 45(°).

(6) If the pitch of the diffraction grating is d and the order of the diffracted light is m, then

d $\times$ (1.67 $\times$ sin (-45) - 1.50 $\times$ sin (26.6)) = m $\times$ 0.53, based on the general formula of the diffraction grating. If the minus second order diffracted light is used, m = -2, therefore

$$d = (-2 \times 0.53) / (1.67 \times (-0.707) - 1.50 \times 0.448) = 0.57 \ \mu m.$$

A more concrete configuration of the optical device according to an embodiment will be described.

Referring to FIG. 4 again, the diffraction grating (101) disposed in the light guiding member is obliquely disposed with respect to the light traveling direction in the light guiding member. The diffraction grating, which is disposed on each end of the light guiding member is obliquely disposed, so that the light transmitted through or reflected by the diffraction grating disposed on the entering side of the optical device (10) is reflected in a region of the light guiding member where the diffraction grating is not disposed (420 to 430).

By this oblique disposition, the light can be efficiently guided to the user without using reflection film on the surface facing the diffraction grating 101. As illustrated in FIG. 3, the optical device 10 is formed inside the lens, and allows the light from the light source with a 530 nm wavelength to vertically enter the light guiding plate 100. The refractive index of the light guiding plate 100 in this case is 1.67, and the refractive index of the external lens is 1.50.

The diffraction grating is disposed vertically to the light source, such that the linearly polarized light in the TE-TM mode mixed state is parallel with the light traveling direction in the light guiding member, as disclosed in FIG. 2 of Japanese Patent Application Publication No. 2015-053163. For example, if a comb-tooth-shaped diffraction grating having a pitch of 0.35 $\mu$m and a height of 2.0 $\mu$m is used, the diffraction efficiency obtained with the first order diffracted light is 5.0%.

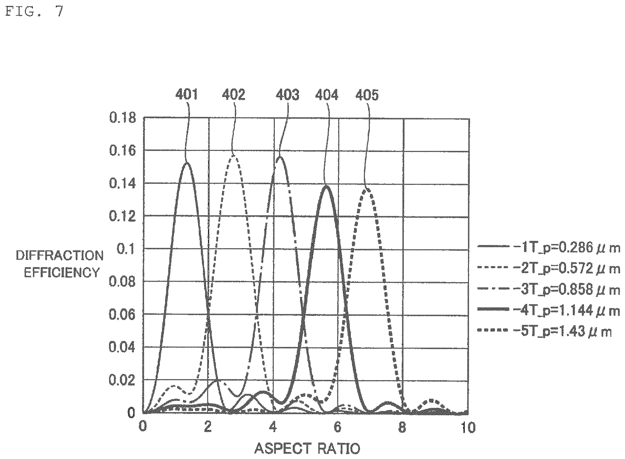

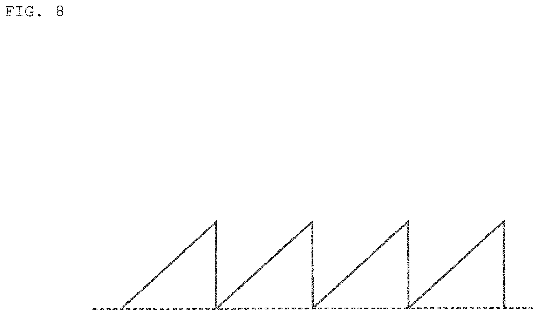

FIG. 7 shows a dependency of the diffraction efficiency on the order of diffraction in the case when the tilt angle 140 with respect to the light traveling direction is 26.6°, and the pitch of the right triangular-shaped diffraction gratings is changed according to the aspect of the embodiment depicted in FIG. 4. FIG. 7 is a graph depicting the dependency of the diffraction efficiency on the order of diffraction. FIG. 8 is a diagram depicting a cross-sectional shape of the diffraction grating.

In FIG. 7, the line 401 (-1T_p = 0.286 $\mu$m) indicates a minus first order diffracted light when the pitch is 0.286 $\mu$m. The line 402 (-2T_p = 0.572 $\mu$m) indicates a minus second order diffracted light when the pitch is 0.572 $\mu$m. The line 403 (-3T_p = 0.858 $\mu$m) indicates a minus third order diffracted light when the pitch is 0.858 $\mu$m. The line 404 (-4T_p = 1.144 $\mu$m) indicates a minus fourth order diffracted light when the pitch is 1.144 $\mu$m. The line 405 (-5T_p = 1.43 $\mu$m) indicates a minus fifth order diffracted light when the pitch is 1.43 $\mu$m. Here, according to an example, the maximum diffraction efficiency is about 16% when the pitch is 0.572 $\mu$m, the height is 1.57 $\mu$m, and the minus second order diffracted light is used.

Then the optical device in FIG. 1 is designed using this diffraction grating. It is assumed that the thickness of the light guiding unit is t, the incident beam diameter is $\phi$, and the length of the light guiding unit is w. Here the length w of the light guiding unit is a distance between the entrance and exit of light in the light guiding unit, when the diffraction grating is obliquely disposed on each end of the light guiding unit with respect to the light traveling direction. Since tan (26.6°) = 0.5, t and $\phi$ are t = 2 mm and $\phi$ = 4 mm, for example. As illustrated in FIG. 4, the tilt angle and the incident angle $\theta_{in}$ are the same. If the pitch of the diffraction grating is 0.57 $\mu$m and the order of the diffracted light is -2, then

$$0.57 \times (1.67 \times \sin (-\theta_{out}) - 1.50 \times \sin (26.6)) = -2 \times 0.53$$

is established based on the general formula of the diffraction grating, hence $\theta_{out} = 45°$ is determined. Here $\theta_{cri} = \theta_{in} + \theta_{out}$, hence $\theta_{cri} = 71.6°$, and since tan (71.6°) = 3.0, the length w of the light guiding unit, when the light is reflected 5 times in the light guiding unit as illustrated in FIG. 1, is 30 mm.

Since arcsin ($n_{out}$ / $n_{in}$) = arcsin (1.50 / 1.67) = 63.9°, the condition of the total reflection ($\theta_{cri}$ > arcsin ($n_{out}$ / $n_{in}$)) is satisfied, and the light loss in the propagation inside the light guiding unit is substantially negligible.

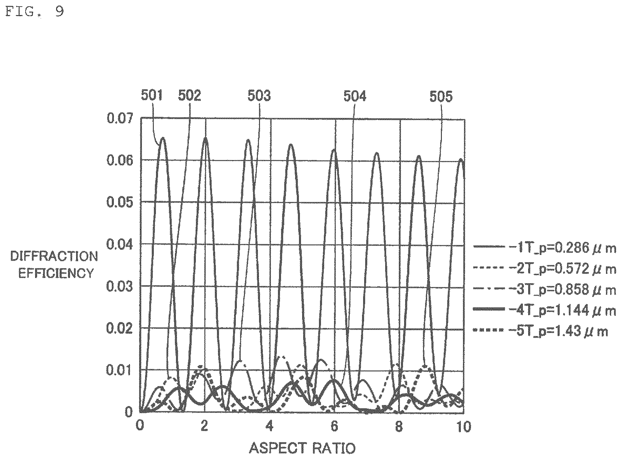

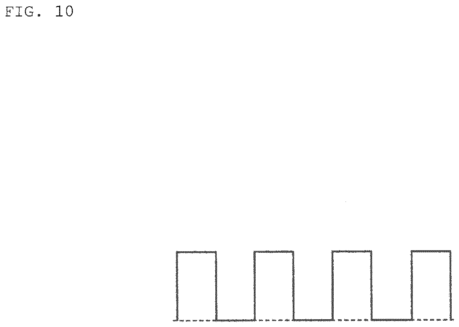

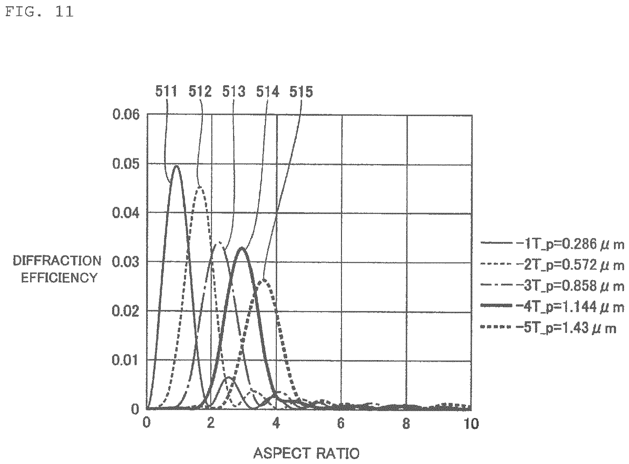

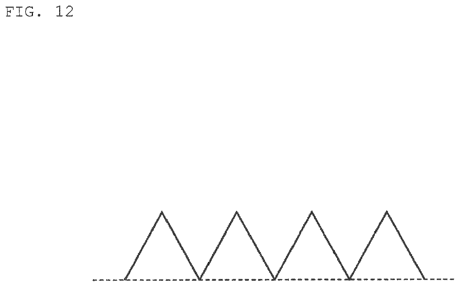

Another aspect of the invention will be described next with reference to FIG. 9 to FIG. 12. FIG. 9 and FIG. 11 are graphs depicting the results of calculating the dependency on the shape of the diffraction grating, using comb-tooth-shaped and isosceles triangular saw-tooth-shaped diffraction gratings each having a duty ratio of 50%, when the total number of times of reflection is 5, and the optical device size is: t = 2 mm, $\phi$ = 4 mm, and w = 30 mm. FIG. 10 and FIG. 12 are diagrams depicting cross-sectional shapes of each diffraction grating respectively. The diffraction efficiency with second order diffracted light in this case was about 1.2% and about 4.5% respectively. As this result indicates, the diffraction efficiency depends on the cross-sectional shape of the diffraction grating.

In FIG. 9, the line 501 (-1T_p = 0.286 $\mu$m) indicates a minus first order diffracted light when the pitch is 0.286 $\mu$m. The line 502 (-2T_p = 0.572 $\mu$m) indicates a minus second order diffracted light when the pitch is 0.572 $\mu$m. The line 503 (-3T_p = 0.858 $\mu$m) indicates a minus third order diffracted light when the pitch is 0.858 $\mu$m. The line 504 (-4T_p = 1.144 $\mu$m) indicates a minus fourth order diffracted light when the pitch is 1.144 $\mu$m. The line 505 (-5T_p = 1.43 $\mu$m) indicates a minus fifth order diffracted light when the pitch is 1.43 $\mu$m.

In FIG. 11, the line 511 (-1T_p = 0.286 $\mu$m) indicates a minus first order diffracted light when the pitch is 0.286 $\mu$m. The line 512 (-2T_p = 0.572 $\mu$m) indicates a minus second order diffracted light when the pitch is 0.572 $\mu$m. The line 513 (-3T_p = 0.858 $\mu$m) indicates a minus third order diffracted light when the pitch is 0.858 $\mu$m. The line 514 (-4T_p = 1.144 $\mu$m) indicates a minus fourth order diffracted light when the pitch is 1.144 $\mu$m. The line 515 (-5T_p = 1.43 $\mu$m) indicates a minus fifth order diffracted light when the pitch is 1.43 $\mu$m.

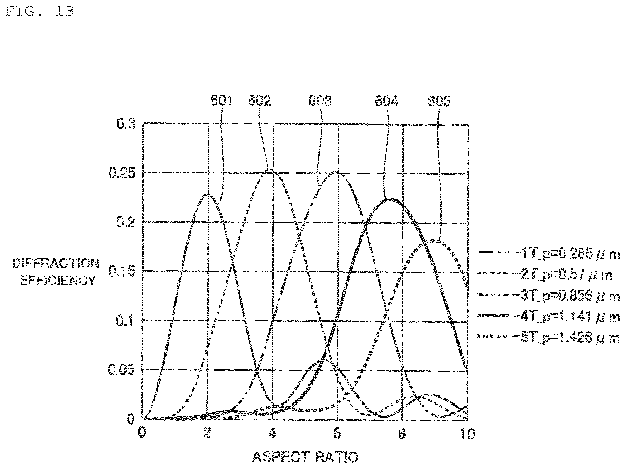

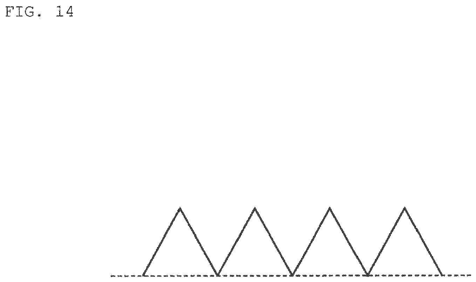

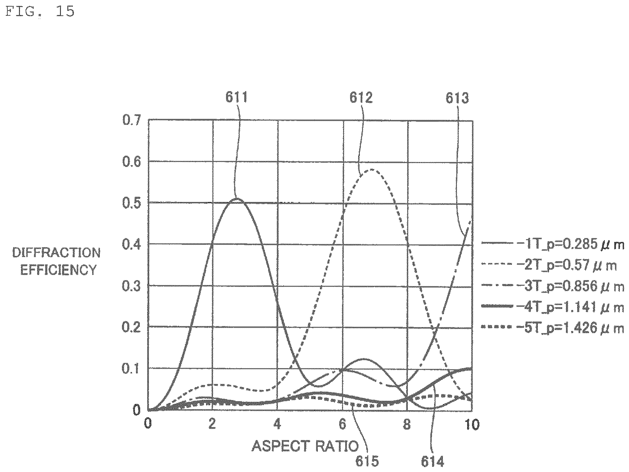

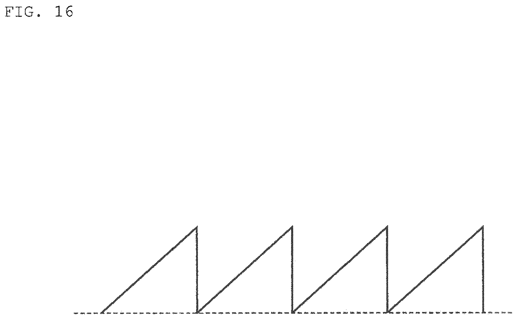

FIG. 13 and FIG. 15 are graphs depicting the results of calculating the dependency on the shape of the diffraction grating, when the total number of times of reflection is 5 and the optical device size is: t = 2 mm, $\phi$ = 3 mm and w = 30 mm. FIG. 14 and FIG. 16 are diagrams depicting the cross-sectional shapes of the diffraction grating respectively.

In FIG. 13, the line 601 (-1T_p = 0.286 $\mu$m) indicates a minus first order diffracted light when the pitch is 0.286 $\mu$m. The line 602 (-2T_p = 0.572 $\mu$m) indicates a minus second order diffracted light when the pitch is 0.572 $\mu$m. The line 603 (-3T_p = 0.858 $\mu$m) indicates a minus third order diffracted light when the pitch is 0.858 $\mu$m. The line 604 (-4T_p = 1.144 $\mu$m) indicates a minus fourth order diffracted light when the pitch is 1.144 $\mu$m. The line 605 (-5T_p = 1.43 $\mu$m) indicates a minus fifth order diffracted light when the pitch is 1.43 $\mu$m. As FIG. 13 and FIG. 15 indicate, the diffraction efficiency can also be improved by the device size.

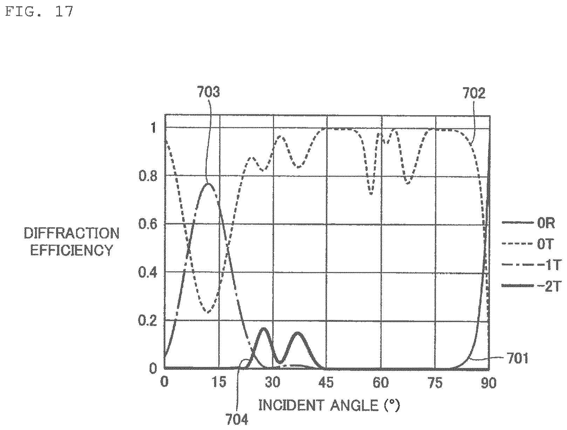

Then the characteristics of oblique incidence was examined in order to improve flexibility of disposition. FIG. 17 is a graph depicting the dependency of the light intensity on the incident angle to the diffraction grating surface, the cross-section of which is a right triangle, in the case of the reflected light, the transmitted light, the first order diffracted light, and the second order diffracted light.

The line 701 indicates the dependency of the diffraction efficiency of the reflected light (0R) on the incident angle. The line 702 indicates the dependency of the diffraction efficiency of the incident light (0T) on the incident angle. The line 703 indicates the dependency of the diffraction efficiency of the minus first order diffracted light (-1T) on the incident angle. The line 704 indicates the dependency of the diffraction efficiency of the minus second order diffracted light (-2T) on the incident angle.

This indicates that the diffraction efficiency depends on the incident angle at each degree. Therefore the flexibility of disposing the light source further improves if the light source is obliquely disposed to the light guiding unit and maximum diffraction efficiency is implemented by changing the relative angle of the light guiding unit with the light source, rather than disposing the diffraction grating parallel with the light guiding unit and implementing the maximum diffraction efficiency by changing only the incident angle of the light source.

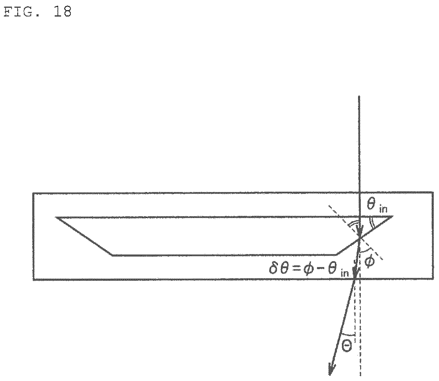

Finally the diffraction grating on the emitting side is considered. For example, even if a parallel plate, to which a ray vertically enters and emits, exists inside the lens, the direction of the ray that enters the eye ball from the outside is not affected by the parallel plate. However, if a prism exists on the ray, the ray is refracted due to the refractive index difference at the interface, as illustrated in FIG. 18.

For example, when an optical element (refractive index 1.67 and tilt angle 26.6°) exists inside the parallel plate (refractive index 1.50), the refraction of the ray which vertically entered the parallel plate is

$$1.67 \times \sin \theta_{in} = 1.50 \times \sin \phi,$$

where $\theta_{in}$ is the incident ray angle with respect to the normal line of the slop of the optical element, and $\phi$ is the emitting angle with respect to the normal line of the slope of the optical element. The incident angle with respect to the normal line of the emitting surface in the external plate is $\phi - \theta_{in}$, and if the emitting angle with respect to the normal line of the emitting surface in the external plate is $\theta_{out}$, then $1.50 \times \sin(\phi - \theta_{in}) = 1.0 \times \sin\theta_{out}$.

Here the outside of the external plate is assumed to be air (refractive index 1.0), and the final refraction angle with respect to the ray which vertically entered the parallel plate is given by $(\phi - \theta_{in}) + \theta_{out}$.

According to an example, the tilt angle of the optical element is 26.6°, which is the same as the incident ray angle $\theta_{in}$ with respect to the normal line of the slope of the optical element. Therefore $(\phi - \theta_{in}) = 3.30°$, $\theta_{out} = 4.96°$, and the refraction angle is 8.26°, and in the external visual field where the ray transmits through the slope, the image is shifted corresponding to the refraction angle. Therefore as illustrated in FIG. 3, the diffraction grating on the emitting side is disposed parallel with the light guiding unit, whereby the image deviation can be solved.

As described above, according to an embodiment, in a light guiding plate including a diffraction grating which can be applied to a wearable device, the diffraction grating is obliquely disposed with respect to the light traveling direction in the light guiding plate, whereby the diffraction efficiency can be improved.

According to an embodiment, the diffraction efficiency may also be improved by the cross-sectional shape of the diffraction grating, the size of the optical device, and the incident angle.

According to an embodiment, the diffraction grating is obliquely disposed, whereby the flexibility increases in the relative angle with the light source to improve the diffraction efficiency, and flexibility in disposing the light source increases.

According to an embodiment, when a prism effect (image shift in the visual field) is generated on the emitting side due to an oblique disposition of the diffraction grating, the diffraction grating on the emitting side is disposed to be approximately parallel with the light traveling direction in the light guiding plate, whereby the prism effect can be solved.

Summary

In summary, the optical device according to this invention has the following configuration.

Configuration 1

- The optical device according to an embodiment includes the light guiding member (e.g. light guiding unit 100) and
- one or more diffraction grating(s) (e.g. diffraction gratings 101 and 102) disposed in the light guiding member.
- The one or more diffraction gratings are obliquely disposed with respect to the longitudinal direction (e.g. arrow 190 direction) of the light guiding member.

Configuration 2

According to an embodiment, the optical device having Configuration 2 has the following configuration in addition to Configuration 1.

- Both ends of the light guiding member are formed to be oblique with respect to the above mentioned direction,
- the diffraction grating (e.g. diffraction grating 101, 102) is disposed on each end of the light guiding member, and
- the optical device is configured so that the light transmitted through the diffraction grating disposed on the entering side of the optical device (e.g. diffraction grating 101) is reflected in a region of the light guiding member where the diffraction grating is not disposed.

Configuration 3

According to an embodiment, the optical device having Configuration 3 has the following configuration in addition to Configuration 1 or Configuration 2.

- The entering side end, out of both ends of the light guiding member (e.g. light guiding unit 100), is obliquely formed with respect to the above mentioned direction,
- the diffraction grating is obliquely disposed on the entering side end so that the light transmitted through the diffraction grating disposed on the entering side end (e.g. diffraction grating 101) is reflected by the diffraction grating disposed on the emitting side end out of the both ends (e.g. diffraction grating 102).

Configuration 4

According to an embodiment, the optical device having Configuration 4 has the following configuration, in addition to any one of the above configurations.

- One or more diffraction gratings include either one of a transmission type diffraction grating and a reflection type diffraction grating.

Configuration 5

According to an embodiment, the optical device having Configuration 5 has the following configuration, in addition to any one of the above configurations. • A slope, which corresponds to the inclination at which the one or more diffraction gratings are disposed, is formed on each of the end faces of the light guiding member (e.g. light guiding unit 100, 300).

Configuration 6

According to an embodiment, the optical device having Configuration 6 includes the light guiding member (e.g. light guiding unit 100, 300) that is formed inside the lens, in addition to any one of the above configurations.

As described above, according to the optical device according to this embodiment, the diffraction grating is obliquely disposed on or formed in the light guiding unit with respect to the longitudinal direction of the light guiding unit. Therefore it is easier to direct the lower order diffracted light (e.g. ± first order diffracted light, ± second order diffracted light) to the eye of the user of the optical device. As a result, flexibility in disposing the image display apparatus which outputs images increases, and flexibility in disposing the eye of the user also increases.

The optical device according to this embodiment is a transmission type, hence light loss due to interface reflection can be decreased compared with a reflection type optical device. Further, the scattered light is reflected toward the light guiding plate, hence noise (light) toward the eye decreases. More specifically, when considering the total quantity of light from the projector to the eye according to an embodiment, a number of interfaces that the light passes through can be decreased if the transmission type optical device of this embodiment is used. For example, in the case of the reflection type optical device, the incident light from the projector travels from the lens surface of the spectacles → interface of the light guiding plate → reflection (diffraction) surface. In the case of the transmission type optical device of this embodiment, on the other hand, the incident light travels from the lens surface of the spectacles → diffraction surface, which is advantageous in terms of decreasing the light loss due to the interface reflection.

Further, when considering light scattering on the diffraction/reflection surface according to an embodiment, if the reflection type optical device is used, the scattered light is generated inside the light guiding plate on the entering side, but if the transmission type optical device is used, the incident light is reflected toward the spectacle lens, which is advantageous in terms of decreasing noise (light) toward the eye. On the emitting side as well, if the reflection type optical device is used, the scattered light is directed toward the eye. If the transmission type optical device is used, on the other hand, the scattered light is reflected toward the light guiding plate, which decreases noise (light) toward the eye.

The optical device according to this invention can be applied to spectacles, head mount displays and other wearable devices.

While the present invention has been described in detail, it should be understood that the invention is not limited to the disclosed exemplary embodiments, and the scope of the invention should be interpreted by the scope of the following Claims.

[Reference Signs List]

| | |
|---|---|
| 10, 30 | Optical device |
| 101, 102 | Diffraction grating |
| 100, 300 | Light guiding unit |
| 110 | Width |
| 111, 112 | Reflecting unit |
| 120 | Height |
| 130 | Thickness |
| 140 | Tilt angle |
| 150 | Micro-projector (light source) |

160     Image display apparatus
170     Collimate lens
180     Eye

**Claims**

1.  An optical device, comprising:

    a light guiding member; and
    one or more diffraction gratings disposed in the light guiding member, wherein
    the one or more diffraction gratings are obliquely disposed with respect to a longitudinal direction of the light
    guiding member.

2.  The optical device according to Claim 1, wherein
    both ends of the light guiding member are formed to be oblique with respect to the longitudinal direction,
    the diffraction gratings are disposed on both end faces of the light guiding member, respectively, and
    each of the diffraction gratings is obliquely disposed so that light transmitted through the diffraction grating disposed
    on an entering side of the optical device is reflected in a region of the light guiding member where the diffraction
    grating is not disposed.

3.  The optical device according to Claim 1, wherein
    an entering side end, out of the both ends of the light guiding member, is obliquely formed with respect to the
    longitudinal direction, and
    the diffraction grating is obliquely disposed on the entering side end so that light transmitted through the diffraction
    grating disposed on the entering side end is reflected or diffracted by the diffraction grating disposed on an emitting
    side end out of the both ends of the light guiding member.

4.  The optical device according to any one of Claims 1 to 3, wherein
    the one or more diffraction gratings include either one of a transmission type diffraction grating and a reflection type
    diffraction grating.

5.  The optical device according to any one of Claims 1 to 4, wherein
    a slope, which corresponds to an inclination at which the one or more diffraction gratings are disposed, is formed
    on each of the end faces of the light guiding member.

6.  The optical device according to any one of Claims 1 to 5, wherein
    the light guiding member is formed inside a lens.

EP 3 339 938 A1

FIG. 1

FIG. 2

10

(A)

101    110    102

120

(B)

101    112    190    111    102

130

150    170    160

180

FIG. 3

EP 3 339 938 A1

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

## INTERNATIONAL SEARCH REPORT

| International application No. |
| --- |
| PCT/JP2016/074423 |

**A. CLASSIFICATION OF SUBJECT MATTER**
*G02B27/02*(2006.01)i, *G02B5/18*(2006.01)i, *G02B6/34*(2006.01)i

According to International Patent Classification (IPC) or to both national classification and IPC

**B. FIELDS SEARCHED**

Minimum documentation searched (classification system followed by classification symbols)
G02B27/01, G02B27/02, G02B5/04, G02B5/18, G02B6/34, H04N5/64

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2006-133376 A  (Nikon Corp.),<br>25 May 2006 (25.05.2006),<br>paragraphs [0011] to [0025]; fig. 1 to 2, 10<br>(Family: none) | 1,4-6<br>6<br>2-3 |
| X<br>Y | JP 2002-098928 A  (Minolta Co., Ltd.),<br>05 April 2002 (05.04.2002),<br>paragraphs [0018] to [0035], [0059] to [0062];<br>fig. 1 to 2, 13<br>(Family: none) | 1,4-6<br>2-3,6 |
| X<br>Y<br>A | JP 2013-083686 A  (Seiko Epson Corp.),<br>09 May 2013 (09.05.2013),<br>paragraph [0094]; fig. 13<br>(Family: none) | 1,4-5<br>6<br>2-3 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    17 October 2016 (17.10.16) | Date of mailing of the international search report<br>    25 October 2016 (25.10.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2016/074423 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2005-316304 A  (Sony Corp.),<br>10 November 2005 (10.11.2005),<br>paragraphs [0066] to [0140]; fig. 7 to 10<br>(Family: none) | 1,3-5<br>2-3,6 |

Form PCT/ISA/210 (continuation of second sheet) (January 2015)

## REFERENCES CITED IN THE DESCRIPTION

**Patent documents cited in the description**

- JP 2015053163 A